# EUROPEAN PATENT APPLICATION

(11) **EP 4 826 533 A1**
(43) Date of publication of application: **21.10.2026**
(21) Application number: 24906395.9
(22) Date of filing: 18.12.2024
(51) Int. Cl.: G06F 9/50

(54) **SERVICE PROCESSING METHOD AND APPARATUS FOR PLURALITY OF PROCESSING CORES, AND DEVICE**

(30) Priority: 22.12.2023 CN 202311794035
(71) Applicant: Huawei Technologies Co., Ltd., Shenzhen, Guangdong 518129 (CN)
(72) Inventor: DI, Qianli, Shenzhen, Guangdong 518129 (CN); SU, Fang, Shenzhen, Guangdong 518129 (CN); CHEN, Qifeng, Shenzhen, Guangdong 518129 (CN)
(74) Representative: Gill Jennings & Every LLP
(86) International application number: PCT/CN2024/140271
(87) International publication number: WO 2025/130916

(57) **Abstract**

A service processing method and apparatus for a plurality of processing cores, and a device are provided, and relate to the field of electronic technologies, to improve speculation accuracy in a multi-core system and further improve service processing performance. The method includes: A first processing core obtains first running information, where the first running information is obtained by the first processing core by running a first service; the first processing core receives second running information from a second processing core, where the second running information is obtained by the second processing core by running a second service; and when determining, based on the first running information and the second running information, that the first service and the second service are at least partially the same, the first processing core runs the first service based on the second running information. Because the second running information is running information obtained by the second processing core through actual running, and the first service and the second service are partially the same, the first processing core runs the first service based on the second running information, thereby greatly improving the speculation accuracy and speculation efficiency.

## Description

This application claims priority to Chinese Patent Application No. 202311794035.2, filed with the China National Intellectual Property Administration on December 22, 2023 and entitled "SERVICE PROCESSING METHOD AND APPARATUS FOR A PLURALITY OF PROCESSING CORES, AND DEVICE", which is incorporated herein by reference in its entirety.

### TECHNICAL FIELD

This application relates to the field of electronic technologies, and in particular, to a service processing method and apparatus for a plurality of processing cores, and a device.

### BACKGROUND

During service processing, cache resources and bandwidth resources of a multi-core system often become bottlenecks during peak performance. Currently, speculative means such as front-end prefetch and back-end prefetch are usually used in the single-core system to improve service processing performance. However, such speculative means cause additional bandwidth overheads and cache overheads. For example, an error in the front-end prefetch causes an invalid instruction to be fetched from an incorrect path and generate invalid memory access, and the back-end prefetch generates a large quantity of memory access requests for guessed addresses, which pollute the cache and cause bandwidth bottlenecks. Consequently, speculative means used by the single-core system have poor effect when being applied to the multi-core system.

### SUMMARY

This application provides a service processing method and apparatus for a plurality of processing cores, and a device, to improve speculation accuracy in a multi-core system, and further improve service processing performance.

To achieve the foregoing objective, the following technical solutions are used in embodiments of this application.

According to a first aspect, a service processing method for a plurality of processing cores is provided, and the plurality of processing cores may be a plurality of processing cores in a multi-core system. The method includes: A first processing core obtains first running information, where the first running information is obtained by the first processing core by running a first service, and the first processing core is a follower core or a secondary core; the first processing core receives second running information from a second processing core, where the second running information is obtained by the second processing core by running a second service, the second processing core is a processing core with a high running speed in the plurality of processing cores, the second processing core is referred to as a leader core or a primary core, and a running speed of the first processing core is lower than a running speed of the second processing core; and when determining, based on the first running information and the second running information, that the first service and the second service are at least partially the same, the first processing core runs the first service based on the second running information.

In the foregoing technical solution, because the second running information is running information obtained by the second processing core through actual running, and the first service and the second service are partially the same, that is, there is repetition and similarity between running of the first service and running of the second service, when the first processing core runs the first service based on the second running information, speculation accuracy and speculation efficiency can be greatly improved, thereby improving overall performance of processing services by the plurality of processing cores, and reducing power consumption overheads caused by a conventional speculation failure.

In a possible implementation of the first aspect, the first running information and the second running information include at least one of the following: data address information, instruction address information, branch address information, jump information, or value prediction information. In the foregoing possible implementation, when the second running information includes the data address information, the first processing core runs the first service based on the second running information, so that a data fetch cache miss rate can be greatly reduced. When the second running information includes the instruction address information, the first processing core runs the first service based on the second running information, so that an instruction fetch cache miss rate can be greatly reduced. When the second running information includes the branch address information, the first processing core runs the first service based on the second running information, so that a branch prediction failure rate can be greatly reduced. When the second running information includes the jump information or the value prediction information, the first processing core runs the first service based on the second running information, so that the speculation accuracy and the speculation efficiency can be greatly improved, thereby improving overall service performance.

In a possible implementation of the first aspect, the first running information includes a plurality of pieces of first address information, and the second running information includes a plurality of pieces of second address information; and that the first processing core determines, based on the first running information and the second running information, that the first service and the second service are at least partially the same includes: when a quantity of pieces of same address information in the plurality of pieces of first address information and the plurality of pieces of second address information is greater than a preset threshold, the first processing core determines that the first service and the second service are at least partially the same; or when a quantity of same address offset values in address offset values of the plurality of pieces of second address information relative to the plurality of pieces of first address information is greater than a preset threshold, the first processing core determines that the first service and the second service are at least partially the same, where the address offset values of the plurality of pieces of second address information relative to the plurality of pieces of first address information include an address offset value of each piece of second address information relative to each piece of first address information. In the foregoing possible implementation, the first processing core may determine, based on the quantity of pieces of same address information in the plurality of pieces of first address information included in the first running information and the plurality of pieces of second address information included in the second running information, or based on the quantity of same address offset values in the address offset values of the plurality of pieces of second address information relative to the plurality of pieces of first address information, whether the first service and the second service are at least partially the same, so that more dynamic address allocation scenarios can be covered, thereby improving coverage of benefits.

In a possible implementation of the first aspect, the method further includes: The first processing core receives security information from the second processing core, and verifies security of the second processing core based on the security information. Optionally, the security information includes at least one of the following: an address space identifier ASID, a virtual machine identifier VMID, or privilege level information. Optionally, the security information and a data packet of the second running information may be synchronously transmitted, to reduce complexity of transmitting the security information and the second running information. Alternatively, the security information is asynchronously transmitted by using a data packet in a specific format, that is, the security information and the second running information are transmitted by using different data packets, to reduce a length of the data packet through asynchronous transmission. In the foregoing possible implementation, the first processing core performs security verification on the second processing core, so that speculation security can be improved.

In a possible implementation of the first aspect, that the first processing core receives the second running information from the second processing core includes: The first processing core receives the second running information from the second processing core through a bus. The bus may be a reused bus, or may be a newly added bus.

In a possible implementation of the first aspect, a running frequency of the first processing core is different from a running frequency of the second processing core, and that the first processing core receives the first running information from the second processing core through the bus includes: An asynchronous interface of the first processing core receives the second running information from the second processing core through the bus, and performs asynchronous logic processing on the second running information. In the foregoing possible implementation, synchronous processing can be performed when the frequency of the first processing core is different from the frequency of the second processing core, to ensure that the first processing core can still run the first service based on the second running information.

In a possible implementation of the first aspect, the first processing core includes a first cache, and before the first processing core runs the first service based on the second running information, the method further includes: The first processing core writes the second running information into the first cache as prefetch information of the first service. In the foregoing possible implementation, the speculation accuracy and the speculation efficiency can be greatly improved, thereby improving the overall performance of processing the services by the plurality of processing cores, and reducing the power consumption overheads caused by the conventional speculation failure.

In a possible implementation of the first aspect, the second processing core includes a memory access control module and a second cache, and the method further includes: The memory access control module sends the second running information to the second cache, where the second running information includes address information accessed by the memory access control module in a process in which the second processing core runs the second service; and the second cache receives the second running information and filters a repeated address from the second running information, and sends, to the first processing core, the second running information obtained by filtering the repeated address. Optionally, the second cache includes a cache queue, and specifically, the cache queue receives the second running information and filters the repeated address from the second running information, and sends, to the first processing core, the second running information obtained by filtering the repeated address. In the foregoing possible implementation, the second cache receives and filters the second running information sent to the first processing core, so that transmission efficiency of the second running information can be improved. In addition, an action of receiving the second running information and filtering the repeated address from the second running information may be specifically performed by the cache queue in the second cache. The cache queue is a multiple-in-one-out queue, and can further balance a bandwidth difference between input and output.

According to a second aspect, a service processing apparatus is provided. The apparatus includes a first processing core and a second processing core. The first processing core is configured to: obtain first running information, where the first running information is obtained by the first processing core by running a first service; receive second running information from a second processing core, where the second running information is obtained by the second processing core by running a second service; and when determining, based on the first running information and the second running information, that the first service and the second service are at least partially the same, run the first service based on the second running information; and the second processing core is configured to provide the second running information for the first processing core.

In a possible implementation of the second aspect, the first running information and the second running information include at least one of the following: data address information, instruction address information, branch address information, jump information, or value prediction information.

In a possible implementation of the second aspect, the first running information includes a plurality of pieces of first address information, and the second running information includes a plurality of pieces of second address information; and the first processing core is further configured to: when a quantity of pieces of same address information in the plurality of pieces of first address information and the plurality of pieces of second address information is greater than a preset threshold, determine that the first service and the second service are at least partially the same; or when a quantity of same address offset values in address offset values of the plurality of pieces of second address information relative to the plurality of pieces of first address information is greater than a preset threshold, determine that the first service and the second service are at least partially the same, where the address offset values of the plurality of pieces of second address information relative to the plurality of pieces of first address information include an address offset value of each piece of second address information relative to each piece of first address information.

In a possible implementation of the second aspect, the first processing core is further configured to: receive security information from the second processing core, and verify security of the second processing core based on the security information. Optionally, the security information includes at least one of the following: an address space identifier ASID, a virtual machine identifier VMID, or privilege level information.

In a possible implementation of the second aspect, the apparatus further includes a bus, configured to transmit the second running information from the second processing core to the first processing core.

In a possible implementation of the second aspect, a running frequency of the first processing core is different from a running frequency of the second processing core; and the first processing core includes an asynchronous interface, configured to: receive the second running information from the second processing core through the bus, and perform asynchronous logic processing on the second running information.

In a possible implementation of the second aspect, the first processing core includes a first cache; and the first processing core is further configured to write the second running information into the first cache as prefetch information of the first service.

In a possible implementation of the second aspect, the second processing core includes a memory access control module and a second cache. The memory access control module is configured to send the second running information to the second cache, where the second running information includes address information accessed by the memory access control module in a process in which the second processing core runs the second service; and the second cache is configured to filter a repeated address from the second running information.

According to a third aspect, an electronic device is provided. The electronic device includes a memory and at least one processor. The memory is configured to store computer instructions, and the at least one processor includes a plurality of processing cores and is configured to execute the computer instructions, so that the electronic device implements the service processing method according to the first aspect or any one of the possible implementations of the first aspect.

According to still another aspect of this application, a computer-readable storage medium is provided. The computer-readable storage medium stores a computer program or instructions, and when the computer program or the instructions are run, the service processing method according to the first aspect or any one of the possible implementations of the first aspect is implemented.

According to still another aspect of this application, a computer program product is provided. The computer program product includes a computer program (which may also be referred to as code or instructions), and when the computer program is run, a computer is enabled to perform the service processing method according to the first aspect or any one of the possible implementations of the first aspect.

It may be understood that for beneficial effect that can be achieved by any one of the service processing apparatus, the electronic device, the computer-readable storage medium, and the computer program product provided above, refer to beneficial effect in the service processing method provided above. Details are not described herein again.

### BRIEF DESCRIPTION OF DRAWINGS

FIG. 1 is a diagram of performance obtained when speculative means are applied to a single-core system and a multi-core system according to an embodiment of this application;
FIG. 2 is a diagram of processing homogenized services by a plurality of processing cores according to an embodiment of this application;
FIG. 3 is a diagram of a structure of a multi-core system according to an embodiment of this application;
FIG. 4 is a schematic flowchart of a service processing method for a plurality of processing cores according to an embodiment of this application;
FIG. 5A and FIG. 5B are a diagram of processing services by a plurality of processing cores according to an embodiment of this application;
FIG. 6 is a diagram of a service learning mode according to an embodiment of this application;
FIG. 7 is a diagram of a data structure according to an embodiment of this application;
FIG. 8 is a diagram of another data structure according to an embodiment of this application; and
FIG. 9 is a diagram of a service processing apparatus according to an embodiment of this application.

### DESCRIPTION OF EMBODIMENTS

Making and use of embodiments are discussed in detail below. However, it should be understood that many applicable inventive concepts provided in this application may be implemented in a plurality of specific environments. The specific embodiments discussed are merely illustrative of specific ways to implement and use this application and this technology, and do not limit the scope of this application.

Unless otherwise defined, all technical terms used herein have the same meaning as those commonly known to a person of ordinary skill in the art.

Circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not turned on), the circuit/component may also be referred to as being configured to perform the task. Circuits/components used with the "configured to" phrase include hardware, for example, a circuit for performing an operation.

The following describes technical solutions in embodiments of this application with reference to accompanying drawings in embodiments of this application. In this application, "at least one" means one or more, and "a plurality of" means two or more. A term "and/or" describes an association relationship between associated objects, and indicates that three relationships may exist. For example, A and/or B may indicate the following three cases: Only A exists, both A and B exist, and only B exists, where A and B may be singular or plural. A character "/" usually indicates an "or" relationship between the associated objects. "At least one of the following items (pieces)" or a similar expression thereof refers to any combination of these items, including a single item (piece) or any combination of a plurality of items (pieces). For example, at least one of a, b, or c may indicate: a, b, c, "a and b", "a and c", "b and c", or "a, b, and c", where a, b, and c may be singular or plural.

In embodiments of this application, terms such as "first" and "second" are used to distinguish objects with similar names, functions, or purposes. A person skilled in the art may understand that the terms such as "first" and "second" do not limit a quantity and an execution sequence. A term "coupling" indicates an electrical connection, including a direct connection through a wire or a connection end or an indirect connection through another component. Therefore, "coupling" should be considered as a generalized electronic communication connection.

It should be noted that, in this application, terms such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a related concept in a specific manner.

During service processing, cache resources and bandwidth resources of a multi-core system often become bottlenecks during peak performance. Speculative means such as front-end prefetch and back-end prefetch are usually used in a single-core system to improve service processing performance. However, the speculative means cause additional bandwidth overheads and cache overheads. For example, an error in the front-end prefetch causes an invalid instruction to be fetched from an incorrect path and generate invalid memory access, and the back-end prefetch generates a large quantity of memory access requests for guessed addresses, which pollute the cache and cause bandwidth bottlenecks. Consequently, speculative means used by the single-core system have poor effect when being applied to the multi-core system. To resolve the problem, the following embodiments provide corresponding technical means.

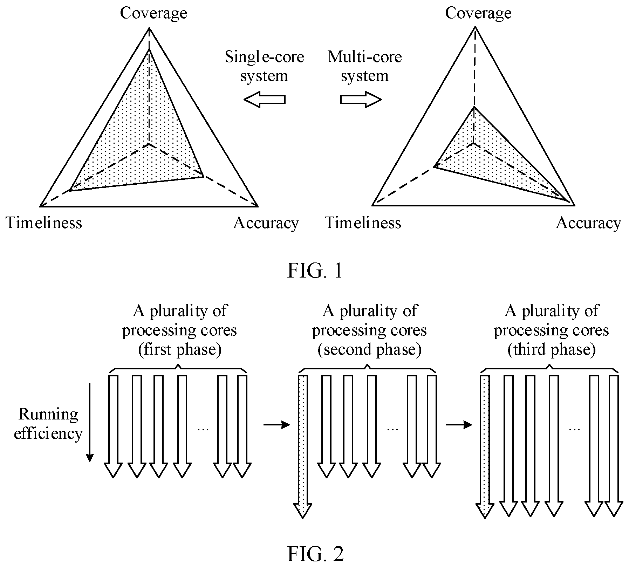

When the speculative means are used in the single-core system and the multi-core system, corresponding performance is usually evaluated by using the following indicators: coverage (coverage), accuracy (accuracy), and timeliness. The coverage is a proportion of all data that is used by a processing core (or referred to as a core or a processor core) and that is prefetched to a cache, and the higher the coverage is, the better. The accuracy is a proportion of prefetched data accessed by the processing core to all prefetched data, and the higher the accuracy is, the better. If the accuracy is too low, useless prefetched data pollutes the cache and occupies a memory bandwidth. The timeliness is an occasion on which data to be accessed is prefetched to the cache. If the data is prefetched to the cache when being accessed, the timeliness is good. If the data is not prefetched to the cache or is prefetched to the cache too early when being accessed, the timeliness is poor. FIG. 1 shows the three indicators corresponding to a case in which the speculative means are applied to the single-core system and the multi-core system. When a speculative means is used in the multi-core system, the accuracy and the coverage cannot be met simultaneously, and usually, the accuracy can be ensured to meet a multi-core requirement only by reducing a performance benefit.

In view of this, embodiments of this application provide a service processing method for a plurality of processing cores. When services processed by the plurality of processing cores are at least partially the same (or referred to as homogenized services or homogeneous tasks), in the method, running information (or referred to as speculative assistance information) that is obtained by running a service by a processing core (for example, a core with high performance) and that is shared between the cores may be used to run a service of another core, so that performance of the another core is greatly improved, thereby improving speculation accuracy and further improving service processing performance. For example, as shown in FIG. 2, a plurality of arrows in FIG. 2 represent a plurality of processing cores, and a length of each arrow represents running efficiency of a processing core. In a first phase, the plurality of processing cores start to run homogenized services, and corresponding running efficiency is close. In a second phase, running efficiency of a 1^{st} processing core is high, and in this case, the 1^{st} processing core shares running information with other processing cores. After the other cores run the services based on the shared running information in a third phase, finally achieved running efficiency of the other cores is close to the running efficiency of the 1^{st} processing core, so that overall performance of a system is improved. That the services mentioned above are at least partially the same or homogenized mean that different tasks perform at least partially the same operations or use at least partially the same data. For example, data address information, instruction address information, branch address information, jump information, or value prediction information related to the tasks is at least partially the same.

The service processing method provided in embodiments of this application may be applied to a multi-core system having a plurality of processing cores. The following describes a structure of the multi-core system.

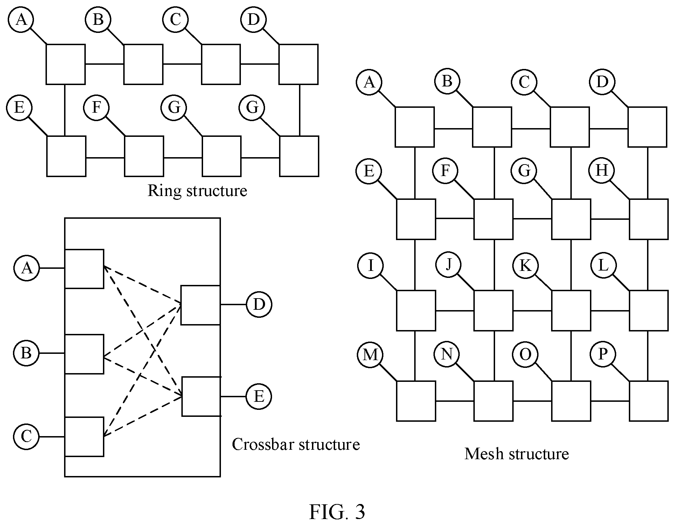

FIG. 3 is a diagram of a structure of a multi-core system according to an embodiment of this application. The multi-core system includes a plurality of processing cores, and the plurality of processing cores may be configured to deploy homogenized services. For example, the plurality of processing cores may be used in a server, or used in a device that performs high-performance computing (high-performance computing, HPC). As shown in FIG. 3, the plurality of processing cores may be coupled into a plurality of different structures, and the plurality of different structures include but are not limited to: a ring structure, a mesh structure, a cross structure, a combination of the structures, or the like. A to P in the figure represent different processing cores. In an example, the plurality of processing cores are coupled into the ring structure through a ring bus (ring bus). For example, the processing core A to the processing core G are coupled into the ring structure. In another example, the plurality of processing cores are coupled into the mesh structure through a mesh bus (mesh bus). For example, the processing core A to the processing core P are coupled into the mesh structure. In still another example, the plurality of processing cores are coupled into a crossbar structure through a crossbar (crossbar) bus. For example, the processing core A to the processing core E are coupled into the crossbar structure.

In the multi-core system, any processing core in the plurality of processing cores and a connected processing core may be directly coupled, or may be coupled through a bus, or may be coupled via a router, or the like. This is not specifically limited in embodiments of this application. In the foregoing example, only an example in which the plurality of processing cores are coupled through the bus is used for description. The foregoing example does not constitute a limitation on this embodiment of this application.

In addition, the plurality of processing cores may include a plurality of different processing cores of a same processor, or the plurality of processing cores include processing cores of a plurality of different processors. Optionally, structures of any two processing cores in the plurality of processing cores and sizes of hardware resources of the any two processing cores may be the same. For example, cache sizes of the plurality of processing cores are the same.

Further, the multi-core system may further include a memory coupled to the plurality of processing cores. The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. For example, the RAM may be a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), and the like. The memory is not shown in the figure.

The multi-core system may be an electronic device, or a system on chip (system on chip, SoC) used in an electronic device, a chipset including a plurality of chips, or a module including the SoC or the chipset. The electronic device may be used as a terminal device or may be used as a server. Optionally, the electronic device includes but is not limited to a mobile phone, a tablet computer, a notebook computer, a desktop computer, a palmtop computer, an ultra-mobile personal computer (ultra-mobile personal computer, umPC), a mobile internet device (mobile internet device, MID), a netbook, a video camera, a camera, a wearable device (for example, a smart watch or a smart band), a vehicle-mounted device (for example, a car, a bicycle, an electric vehicle, an airplane, a ship, a train, or a high-speed railway), a virtual reality (virtual reality, VR) device, an augmented reality (augmented reality, AR) device, a wireless terminal in industrial control (industrial control), a smart home device (for example, a refrigerator, a television, an air conditioner, or an electricity meter), a smart robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, a smart robot, a hot air balloon, an unmanned aerial vehicle, or an airplane), or the like.

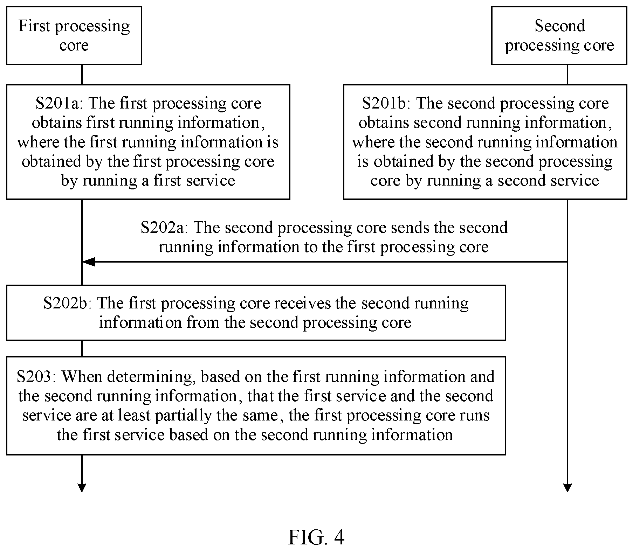

FIG. 4 is a schematic flowchart of a service processing method for a plurality of processing cores according to an embodiment of this application. The method may be applied to the multi-core system provided above. The plurality of processing cores include a first processing core and a second processing core. The method includes the following steps.

S201a: The first processing core obtains first running information, where the first running information is obtained by the first processing core by running a first service.

S201b: The second processing core obtains second running information, where the second running information is obtained by the second processing core by running a second service.

The second processing core is a processing core with a high running speed in the plurality of processing cores, and the second processing core may be referred to as a leader core or a primary core. The first processing core may be any processing core other than the second processing core in the plurality of processing cores, a running speed of the first processing core is lower than a running speed of the second processing core, and the first processing core may be referred to as a follower core or a secondary core.

In addition, the first service and the second service may be completely the same services, or partially the same services (or referred to as close or similar services). The partially same services may mean that data and/or instructions that need to be accessed by two tasks during running are partially the same. For example, the first service and the second service may be two parallel compute services in same high-performance computing. There is high repetition and similarity between running of the first service and running of the second service. For example, there is repetition and similarity in running instructions, data, or branches.

Optionally, that the second processing core serves as the leader core may be preset or specified. For example, the leader core is determined based on physical locations of the plurality of processing cores. For example, a 1^{st} core at the physical location is set as the leader core. Alternatively, the leader core is a processing core corresponding to a logical core determined by a basic input/output system (basic input/output system, BIOS) after the multi-core system is powered on. Alternatively, the leader core is specified by software running on the multi-core system. A manner of specifying the leader core is not specifically limited in embodiments of this application.

In a possible embodiment, when the first processing core receives an execution instruction of the first service, the first processing core runs the first service, and obtains first running information based on a running result of a part that has been run in the first service. Similarly, when the second processing core receives an execution instruction of the second service, the second processing core runs the second service, and obtains second running information based on a running result of a part that has been run in the second service. The running speed of the second processing core is higher than the running speed of the first processing core, or a running progress of the second processing core is greater than a running progress of the first processing core. In this way, the second processing core shares, with the first processing core, the second running information obtained through running, so that speculation performance of the first processing core can be improved, thereby improving service processing performance.

Optionally, the first running information and the second running information include at least one of the following obtained during service execution: data address information, instruction address information, branch address information, jump information, or value prediction information. The data address information (or referred to as memory access information) is an address of actually accessed data in a memory. The instruction address information is an address of an actually accessed instruction in the memory. The branch address information is an address of an actually executed branch in the memory. The jump information may include a jump direction and a jump destination. The jump direction indicates an actual jump direction (that is, jump or not to jump) of a jump instruction, and the jump destination is a destination address after an actual jump. The value prediction information is a value obtained through prediction when memory access is not completed, and the value may be an intermediate execution result. The memory and the one or more processing cores may be located on a same chip or different chips, and may be a volatile memory or a non-volatile memory. This is not limited in this embodiment.

For example, the first running information includes the data address information obtained by the first processing core during running of the first service, and the second running information includes the data address information obtained by the second processing core during running of the second service. Alternatively, the first running information includes the instruction address information obtained by the first processing core during running of the first service, and the second running information includes the instruction address information obtained by the second processing core during running of the second service. Alternatively, the first running information includes the branch address information obtained by the first processing core during running of the first service, and the second running information includes the branch address information obtained by the second processing core during running of the second service.

S202a: The second processing core sends the second running information to the first processing core.

In a possible embodiment, during running of the second service, the second processing core may send, to the first processing core once or a plurality of times, the second running information obtained by running the second service. For example, the second processing core periodically or aperiodically sends, to the first processing core, the second running information obtained by running the second service. For example, during running of the second service, the second processing core periodically sends, to the first processing core, the second running information obtained by running the second service in each cycle; or the second processing core sends, to the first processing core when a storage status of a local cache meets a specific condition, the second running information obtained by running the second service.

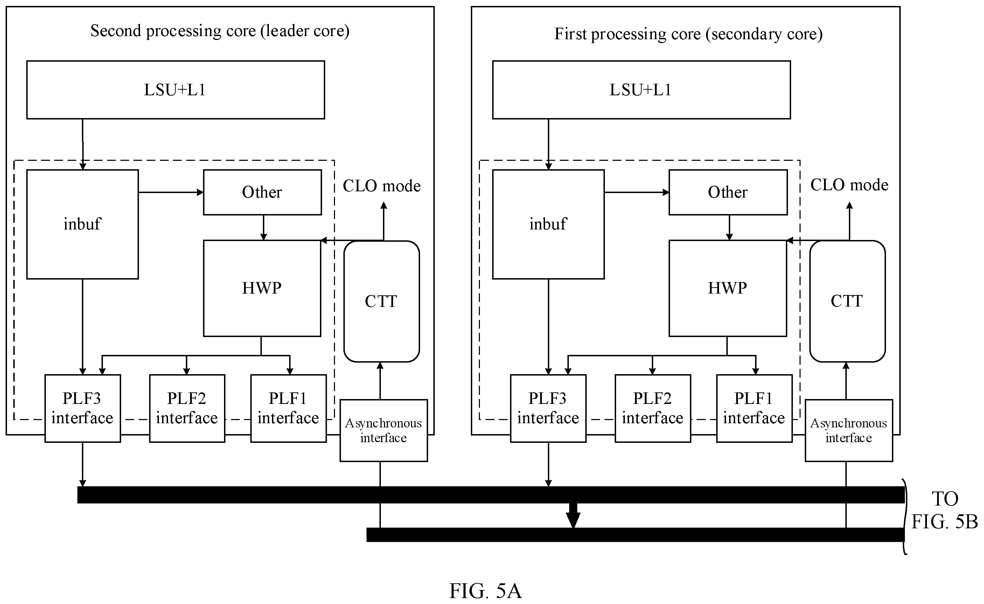

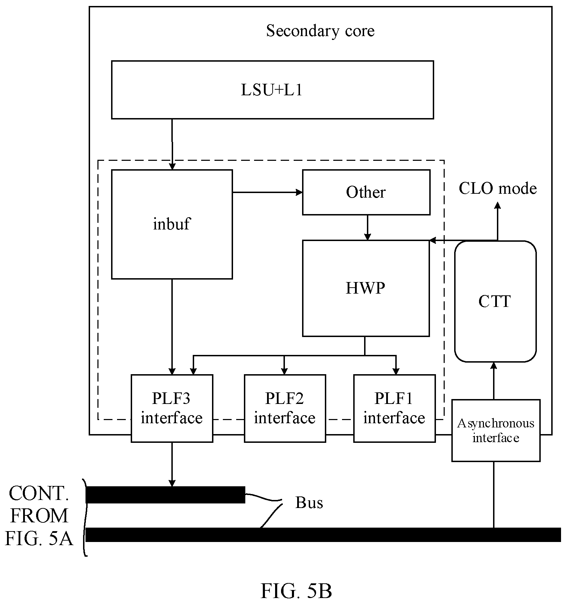

Optionally, as shown in FIG. 5A and FIG. 5B, the second processing core includes a memory access control module and a cache (referred to as a second cache in this specification). The access control module may also be referred to as a load store unit (load store unit, LSU), and the second cache may be a prefetch input buffer (prefetch input buffer, inbuf). Further, the second processing core may further include a level 1 cache (level 1 cache, L1), a hardware prefetcher (hardware prefetcher, HWP), a prefetch to level 1 cache (prefetch to level 1 cache, PFL1) interface, a prefetch to level 2 cache (prefetch to level 2 cache, PFL2) interface, a prefetch to level 3 cache (prefetch to level 3 cache, PFL3) interface, an asynchronous interface (asynchronous interface), and the like. In the figure, an example in which the second processing core includes the LSU, the inbuf, the L1, the PFL1 interface, the PFL2 interface, the PFL3 interface, and the asynchronous interface is used for description, and the LSU and the L1 are represented as LSU+L1. Optionally, as shown in FIG. 5A and FIG. 5B, another processing core (a secondary core), for example, the first processing core, may have a structure similar to that of the second processing core.

In a possible example, with reference to FIG. 5A and FIG. 5B, after the second processing core obtains the second running information, the memory access control module (for example, the LSU) may send the second running information to the second cache (for example, the inbuf), where the second running information includes address information accessed by the memory access control module in a process in which the second processing core executes the second service. When the second cache receives the second running information, the second cache may filter a repeated address from the second running information and then send the second running information to the first processing core. For example, the second cache sends the second running information through the PFL3 interface. For example, the second cache includes a cache queue, and specifically, the cache queue may receive the second running information, filter the repeated address from the second running information, and send the second running information through the PFL3 interface. The cache queue may be a multiple-in-one-out cache queue, and may further be used to balance a bandwidth difference between input and output in addition to being used to filter the repeated address, to improve transmission efficiency of the second running information.

For example, when the second running information sent by the second processing core to the first processing core may include a plurality of pieces of address information (referred to as second address information in this specification), the plurality of pieces of second address information may be memory access request addresses that are not hit in the level 1 cache, or may be a subset, a full set, or the like of a level 1 high-speed memory access address of any rule. This is not specifically limited in embodiments of this application.

Further, the second processing core may further send security information to the first processing core, where the security information may be used to verify security of the second processing core. The security information may be identification information, permission information, and/or the like allocated to the second processing core. For example, the security information includes at least one of the following: an address space identifier (address space identifier, ASID), a virtual machine identifier (virtual machine identifier, VMID), or privilege level information.

The security information and a data packet of the second running information may be synchronously transmitted, to reduce complexity of transmitting the security information and the second running information. Alternatively, the security information is asynchronously transmitted by using a data packet in a specific format, that is, the security information and the second running information are transmitted by using different data packets, to reduce a length of the data packet through asynchronous transmission. For example, the second processor core may send the security information in advance, for the first processor core to complete security verification. For example, the second processor core may send the security information when the device is powered on.

S202b: The first processing core receives the second running information from the second processing core.

Optionally, the plurality of processing cores are coupled through a bus. The bus may be an original bus in the multi-core system (namely, a bus in the multi-core system is reused), or may be a bus separately disposed in this application (for example, a newly added bus). This is not specifically limited in embodiments of this application. The second processing core may send the second running information to the first processing core through the bus. Correspondingly, the first processing core receives the second running information from the second processing core through the bus.

Optionally, the second running information may be transmitted in a compressed format, or may not be transmitted in a compressed format. This is not specifically limited in embodiments of this application.

In a possible embodiment, a frequency of the first processing core is different from a frequency of the second processing core. Optionally, the frequency of the first processing core is lower than the frequency of the second processing core. In this case, an asynchronous interface of the first processing core may perform asynchronous logic processing in a process of receiving the second running information, so that a frequency of the second running information is the same as the frequency of the first processing core.

Optionally, as shown in FIG. 5A and FIG. 5B, the structure of the first processing core is similar to the structure of the second processing core. The first processing core may include a memory access control module and a first cache, and the first cache may be a prefetch input buffer inbuf. Further, the first processing core may further include other modules such as a level 1 cache L1, a hardware prefetcher HWP, a PFL1 interface, a PFL2 interface, a PFL3 interface, and the asynchronous interface. In addition, the PFL3 interface of the first processing core and the PFL3 interface of the second processing core, and the asynchronous interface of the first processing core and the asynchronous interface of the second processing core may be coupled through the bus.

In a possible example, with reference to FIG. 5A and FIG. 5B, that the first processing core receives the second running information from the second processing core through the bus may include: The asynchronous interface of the first processing core receives the second running information from the second processing core through the bus, and performs asynchronous logic processing on the second running information, to implement time sequence synchronization.

It may be understood that the plurality of processing cores may include a plurality of secondary cores, that is, in addition to the first processing core, the plurality of processing cores may further include another secondary core similar to the first processing core. The second processing core (namely, the leader core) may send the second running information to each secondary core. In FIG. 5A and FIG. 5B, an example in which the plurality of secondary cores include two processing cores is used for description.

Further, when the second processing core further sends the security information to the first processing core, the first processing core may receive the security information, and verify the security of the second processing core based on the security information. When determining, based on the security information, that the second processing core is secure, the first processing core may perform the following step S203. Alternatively, security information transmission and security verification may be performed in advance.

S203: When determining, based on the first running information and the second running information, that the first service and the second service are at least partially the same, the first processing core runs the first service based on the second running information. Optionally, when the first service is different from the second service, the first processing core does not run the first service based on the second running information, that is, in this case, the two processing cores do not run homogenized tasks.

Determining that the first service and the second service are at least partially the same may also be referred to as determining to enter a cluster learning optimization (cluster learning optimization, CLO) mode or enter a service sharing and learning mode, that is, the first processing core may run or process the first service based on the second running information shared by the second processing core, or the first processing core learns a manner in which the second processing core runs or processes the second service to process the first service. Optionally, enabling or disabling of the cluster learning optimization mode may be controlled by the first processing core, or a software path is designed to enable or disable the mode by an upper-layer operating system. This is not specifically limited in embodiments of this application.

In an implementation, the first running information includes a plurality of pieces of first address information, and the second running information includes a plurality of pieces of second address information. The plurality of pieces of first address information and the plurality of pieces of second address information may be data address information, instruction address information, or branch address information, or include two types of address information indicated in the three types of address information. For example, the first running information includes a plurality of pieces of first data address information, and the second running information includes a plurality of pieces of second data address information; or the first running information includes a plurality of pieces of first instruction address information, and the second running information includes a plurality of pieces of second instruction address information; or the first running information includes a plurality of pieces of first branch address information, and the second running information includes a plurality of pieces of second branch address information; or the first running information includes a plurality of pieces of first data address information and a plurality of pieces of first instruction address information, and the second running information includes a plurality of pieces of second data address information and a plurality of pieces of second instruction address information; or the first running information includes a plurality of pieces of first instruction address information and a plurality of pieces of first branch address information, and the second running information includes a plurality of pieces of second instruction address information and a plurality of pieces of second branch address information.

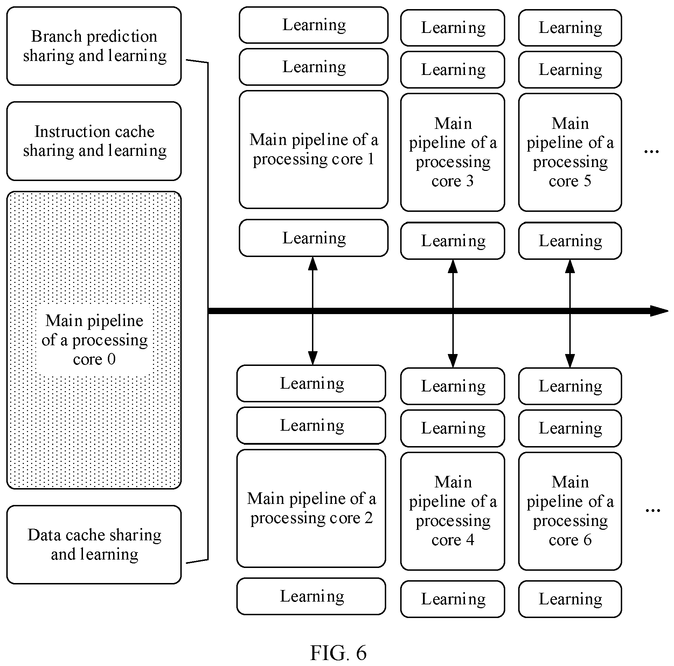

For example, based on different information included in the second running information, the service sharing and learning may include sharing and learning of different information. For example, as shown in FIG. 6, when the plurality of pieces of second address information included in the second running information are data address information, the service sharing and learning includes data cache sharing and learning. When the plurality of pieces of second address information included in the second running information are instruction address information, the service sharing and learning includes instruction cache sharing and learning. When the plurality of pieces of second address information included in the second running information are branch address information, the service sharing and learning includes branch prediction sharing and learning. In FIG. 6, an example in which a processing core 0 in the plurality of processing cores is a leader core and other processing cores (for example, a processing core 1 and a processing core 2) are secondary cores is used for description, and a main pipeline of each processing core is shown.

In a possible embodiment, that the first processing core determines, based on the first running information and the second running information, that the first service and the second service are at least partially the same includes: when a quantity of pieces of same address information in the plurality of pieces of first address information and the plurality of pieces of second address information is greater than a first preset threshold, determining that the first service and the second service are at least partially the same.

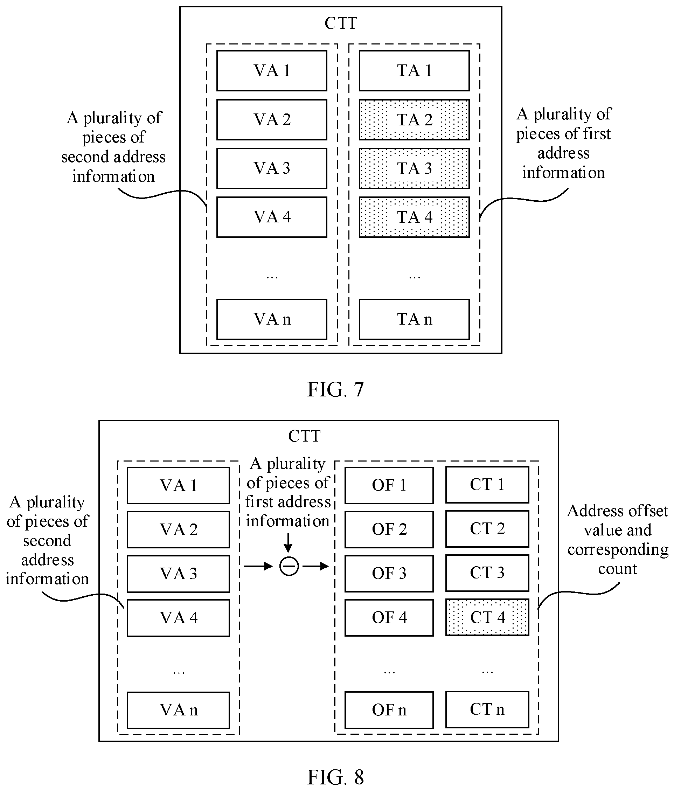

For example, the plurality of pieces of second address information included in the second running information may be arranged based on a specific data structure. When the first processing core determines that a piece of first address information in the plurality of pieces of first address information included in the first running information is the same as a piece of second address information, the first processing core records, in the data structure, the first address information that is the same as the second address information, collects statistics on same address information, and when the quantity of pieces of same address information is greater than the first preset threshold, determines that the first service and the second service are at least partially the same. For example, the data structure may be a cluster learning optimization training table (CLO training table, CTT). As shown in FIG. 5A and FIG. 5B, the CTT may be a naturally wrapped storage structure, and is naturally refreshed through continuous writing. Specifically, as shown in FIG. 7, the CTT may include n (n is a positive integer) rows and two columns. Each row of the first column includes one piece of second address information, and each row of the second column may be used to store one piece of first address information. When finding, in the plurality of pieces of first address information, first address information that is the same as a piece of second address information, the first processing core may store the first address information in a corresponding row and color the row. In FIG. 7, the n pieces of second address information are represented as VA 1 to VA n, the n pieces of first address information are represented as TA 1 to TA n, and colored rows are represented through filling.

In another possible embodiment, when a quantity of same address offset values in address offset values corresponding to the plurality of pieces of first address information and the plurality of pieces of second address information is greater than a second preset threshold, the first processing core determines that the first service and the second service are at least partially the same. The address offset values corresponding to the plurality of pieces of first address information and the plurality of pieces of second address information include address offset values between the plurality of pieces of second address information and each piece of first address information.

For example, the plurality of pieces of second address information included in the second running information may be arranged based on the cluster learning optimization training table CTT. As shown in FIG. 5A and FIG. 5B, for each piece of first address information in the plurality of pieces of first address information, the first processing core determines an address offset value between the first address information and each piece of second address information one by one, records, by using the CTT, each address offset value and a count (the count may be obtained by using a counter) corresponding to the address offset value, and colors a row whose count of an address offset value is greater than the second preset threshold. Specifically, as shown in FIG. 8, the CTT may include n (n is a positive integer) rows and three columns. Each row of the first column includes one piece of second address information, each row of the second column may be used to store one address offset value, and each row of the third column may be used to record a count of an address offset value of a corresponding row. When a count of an address offset value of a row is greater than the second preset threshold, the row is colored. For example, a row in which a maximum count is located is colored, that is, a fixed offset value is learned. In FIG. 8, the n pieces of second address information are represented as VA 1 to VA n, the n address offset values are represented as OF 1 to OF n, corresponding counts are represented as CT 1 to CT n, and a colored row is represented through filling.

The first preset threshold and the second preset threshold may be preset. Specific values are not limited in embodiments of this application.

In addition, in a possible embodiment, when determining that the first service and the second service are at least partially the same, that the first processing core runs the first service based on the second running information may include: The first processing core uses the second running information subsequently received from the second processing core as prefetch information, and continues to run the first service based on the prefetch information. For example, when the second running information includes the data address information, the first processing core runs the first service based on the data address information. When the second running information includes the instruction address information, the first processing core runs the first service based on the instruction address information. When the second running information includes the branch address information, the first processing core runs the first service based on the branch address information. When the second running information includes the jump information, the first processing core runs the first service based on the jump information. When the second running information includes the value prediction information, the first processing core runs the first service based on the value prediction information.

Optionally, before running the first service based on the second running information, the first processing core may further write the second running information into the first cache as prefetch information of the first service, and obtain instructions and/or data from the memory based on the prefetch information, to run the first service based on the obtained instructions and/or data.

For example, as shown in FIG. 5A and FIG. 5B, after identifying, based on the CTT, that the cluster learning optimization mode is entered, the first processing core sends, to a main pipeline of the hardware prefetcher (HWP), the second running information shared by the second processing core. After processing such as cache and address translation, the main pipeline of the hardware prefetcher sends the second running information into a level 1, a level 2, or a level 3 cache based on strategy setting. To be specific, data and/or instructions to be used in the future are/is filled in the cache in advance, and then the first service is run based on the data and/or instructions in the cache, to improve performance of running the first service by the first processing core.

In this embodiment of this application, the first processing core obtains the first running information of the first service, receives the second running information obtained by running the second service by the second processing core, and runs the first service based on the second running information when determining, based on the first running information and the second running information, that the first service and the second service are partially the same. Because the second running information is running information obtained by the second processing core through actual running, and the first service and the second service are partially the same, that is, there is the repetition and similarity between the running of the first service and the running of the second service, when the first processing core runs the first service based on the second running information, speculation accuracy and speculation efficiency can be greatly improved, thereby improving overall performance of processing services by the plurality of processing cores, and reducing power consumption overheads caused by a conventional speculation failure. Specifically, when the first processing core enters the data cache sharing and learning, the first processing core runs the first service based on the second running information that is actually run and that is sent by the second processing core, so that a data fetch cache miss rate can be greatly reduced. When the first processing core enters the instruction cache sharing and learning, the first processing core runs the first service based on the second running information that is actually run and that is sent by the second processing core, so that an instruction fetch cache miss rate can be greatly reduced. When the first processing core enters branch prediction sharing and learning, the first processing core runs the first service based on the second running information that is actually run and that is sent by the second processing core, so that a branch prediction failure rate can be greatly reduced.

In addition, the first processing core runs the first service based on the second running information when determining that the first service and the second service are at least partially the same, and does not run the first service based on the second running information when determining that the first service and the second service are different. In this way, the first processing core can automatically determine whether to run the first service based on the second running information (that is, automatically determine whether it is a benefit scenario), thereby avoiding false triggering and a negative benefit in a non-target scenario.

In addition, the first processing core may directly determine, based on the quantity of pieces of same address information in the plurality of pieces of first address information included in the first running information and the plurality of pieces of second address information included in the second running information, or based on the quantity of same address offset values in the address offset values corresponding to the plurality of pieces of first address information and the plurality of pieces of second address information, whether the first service and the second service are at least partially the same, so that more dynamic address allocation scenarios can be covered, thereby improving coverage of benefits.

Further, the foregoing embodiment is described by using an example in which the running speed of the second processing core is higher than the running speed of the first processing core. Actually, this setting is not used to limit an application scenario of this embodiment. In actual application, the plurality of processing cores may have a same capability or different capabilities or a same processing speed or different processing speeds, and a processing core with a stronger capability is not limited, provided that running information obtained by executing a task by a processing core can be shared with another processing core to execute the technical solution mentioned in this embodiment. For example, FIG. 5A and FIG. 5B are still used as an example. Functions of the primary core and the secondary core may be exchanged, and the first processing core (the secondary core) may send the running information of the first processing core to the second processing core (the primary core), so that the second processing core performs a procedure similar to that in the embodiment in FIG. 4 to implement a similar function. For example, the first processing core may first execute at least a part of a function of a task and obtain running information due to software scheduling, user selection, or the like, and the running information may be shared with the second processing core for continuing to execute a similar homogenized task, to achieve similar effect. It may be understood that the primary core and the secondary core mentioned in this embodiment and a difference between the two cores merely show an applicable scenario, but are not intended to limit the technical solutions.

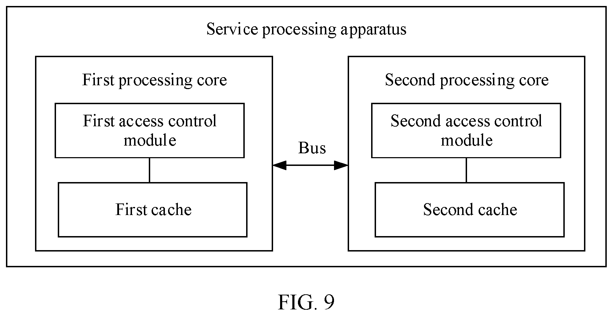

In view of this, an embodiment of this application further provides a service processing apparatus. The apparatus may be used in a multi-core system. As shown in FIG. 9, the apparatus includes a first processing core and a second processing core. In this embodiment of this application, the first processing core may be configured to perform steps S201a, S202b, and S203, the step of receiving the security information from the second processing core and verifying security of the second processing core based on the security information in the foregoing method embodiment, another step described in this specification, and/or the like. The second processing core may be configured to perform step S201b, the step of sending the security information to the first processing core in the foregoing method embodiment, another step described in this specification, and/or the like.

It may be understood that specific structures of the first processing core and the second processing core and all related content of the steps in the foregoing method embodiment may be cited in the embodiment of the service processing apparatus. Details are not described herein again in this embodiment of this application.

In this embodiment of this application, because the second running information is the running information obtained by the second processing core through actual running, and the first service and the second service are partially the same, that is, there is the repetition and similarity between the running of the first service and the running of the second service, when the first processing core runs the first service based on the second running information, the speculation accuracy and the speculation efficiency can be greatly improved, thereby improving the overall performance of processing the services by the plurality of processing cores, and reducing the power consumption overheads caused by the conventional speculation failure.

In another aspect of this application, an electronic device is further provided. The electronic device includes a memory and at least one processor. The memory is configured to store computer instructions, and the at least one processor includes a plurality of processing cores and is configured to execute the computer instructions, so that the electronic device implements any service processing method for a plurality of processing cores provided above. Optionally, the at least one processor includes the service processing apparatus provided above.

It may be understood that all related content of the steps in the foregoing method embodiment may be cited in the embodiment of the service processing apparatus and the embodiment of the electronic device. Details are not described again in this embodiment of this application.

In the several embodiments provided in this application, it should be understood that the disclosed apparatus and method may be implemented in other manners. For example, the described apparatus embodiment is merely an example. For example, division into the modules or units is merely logical function division. There may be another division manner in actual implementation. For example, a plurality of units or components may be combined or may be integrated into another apparatus, or some features may be ignored or not be performed.

The units described as separate components may or may not be physically separate, and component displayed as units may be one or more physical units, may be located in one place, or may be distributed across different places. A part or all of the units may be selected based on actual requirements to achieve the objectives of the solutions of embodiments.

If the integrated unit is implemented in a form of a software functional unit and is sold or used as an independent product, the integrated unit may be stored in a readable storage medium. The readable storage medium may include any medium that can store program code, for example, a USB flash drive, a removable hard disk, a read-only memory, a random access memory, a magnetic disk, or an optical disc. Based on such an understanding, the technical solutions in embodiments of this application essentially, or the part contributing to the conventional technology, or all or some of the technical solutions may be embodied in a form of a software product.

In another embodiment of this application, a readable storage medium is further provided. The readable storage medium stores computer-executable instructions. When a device (which may be a single-chip microcomputer, a chip, or the like) or a processor performs the steps in the foregoing method embodiment.

In still another embodiment of this application, a computer program product is further provided. The computer program product includes computer instructions, and the computer instructions are stored in a readable storage medium. At least one processor of a device may read the computer instructions from the readable storage medium, and the at least one processor executes the computer instructions to enable the device to perform the steps in the foregoing method embodiment.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A service processing method for a plurality of processing cores, wherein the method comprises:
obtaining, by a first processing core, first running information, wherein the first running information is obtained by the first processing core by running a first service;
receiving, by the first processing core, second running information from a second processing core, wherein the second running information is obtained by the second processing core by running a second service; and
when determining, based on the first running information and the second running information, that the first service and the second service are at least partially the same, running, by the first processing core, the first service based on the second running information.

2. The method according to claim 1, wherein the first running information and the second running information comprise at least one of the following: data address information, instruction address information, branch address information, jump information, or value prediction information.

3. The method according to claim 1 or 2, wherein the first running information comprises a plurality of pieces of first address information, and the second running information comprises a plurality of pieces of second address information; and
that the first processing core determines, based on the first running information and the second running information, that the first service and the second service are at least partially the same comprises:
when a quantity of pieces of same address information in the plurality of pieces of first address information and the plurality of pieces of second address information is greater than a preset threshold, the first processing core determines that the first service and the second service are at least partially the same; or
when a quantity of same address offset values in address offset values of the plurality of pieces of second address information relative to the plurality of pieces of first address information is greater than a preset threshold, the first processing core determines that the first service and the second service are at least partially the same, wherein the address offset values of the plurality of pieces of second address information relative to the plurality of pieces of first address information comprise an address offset value of each piece of second address information relative to each piece of first address information.

4. The method according to any one of claims 1 to 3, wherein the method further comprises:
receiving, by the first processing core, security information from the second processing core, and verifying security of the second processing core based on the security information.

5. The method according to claim 4, wherein the security information comprises at least one of the following: an address space identifier ASID, a virtual machine identifier VMID, or privilege level information.

6. The method according to any one of claims 1 to 5, wherein receiving, by the first processing core, the second running information from the second processing core comprises:
receiving, by the first processing core, the second running information from the second processing core through a bus.

7. The method according to claim 6, wherein a running frequency of the first processing core is different from a running frequency of the second processing core, and receiving, by the first processing core, the first running information from the second processing core through the bus comprises:
receiving, by an asynchronous interface of the first processing core, the second running information from the second processing core through the bus, and performing asynchronous logic processing on the second running information.

8. The method according to any one of claims 1 to 7, wherein the first processing core comprises a first cache, and before running, by the first processing core, the first service based on the second running information, the method further comprises:
writing, by the first processing core, the second running information into the first cache as prefetch information of the first service.

9. The method according to any one of claims 1 to 8, wherein the second processing core comprises a memory access control module and a second cache, and the method further comprises:
sending, by the memory access control module, the second running information to the second cache, wherein the second running information comprises address information accessed by the memory access control module in a process in which the second processing core runs the second service; and
filtering, by the second cache, a repeated address from the second running information, and sending, to the first processing core, the second running information obtained by filtering the repeated address.

10. A service processing apparatus, wherein the apparatus comprises:
a first processing core, configured to:
obtain first running information, wherein the first running information is obtained by the first processing core by running a first service;
receive second running information from a second processing core, wherein the second running information is obtained by the second processing core by running a second service; and
when determining, based on the first running information and the second running information, that the first service and the second service are at least partially the same, run the first service based on the second running information; and
the second processing core, configured to provide the second running information for the first processing core.

11. The apparatus according to claim 10, wherein the first running information and the second running information comprise at least one of the following: data address information, instruction address information, branch address information, jump information, or value prediction information.

12. The apparatus according to claim 10 or 11, wherein the first running information comprises a plurality of pieces of first address information, and the second running information comprises a plurality of pieces of second address information; and
the first processing core is further configured to:
when a quantity of pieces of same address information in the plurality of pieces of first address information and the plurality of pieces of second address information is greater than a preset threshold, determine that the first service and the second service are at least partially the same; or
when a quantity of same address offset values in address offset values of the plurality of pieces of second address information relative to the plurality of pieces of first address information is greater than a preset threshold, determine that the first service and the second service are at least partially the same, wherein the address offset values of the plurality of pieces of second address information relative to the plurality of pieces of first address information comprise an address offset value of each piece of second address information relative to each piece of first address information.

13. The apparatus according to any one of claims 10 to 12, wherein the first processing core is further configured to:
receive security information from the second processing core, and verify security of the second processing core based on the security information.

14. The apparatus according to claim 13, wherein the security information comprises at least one of the following: an address space identifier ASID, a virtual machine identifier VMID, or privilege level information.

15. The apparatus according to any one of claims 10 to 14, wherein the apparatus further comprises a bus, configured to transmit the second running information from the second processing core to the first processing core.

16. The apparatus according to claim 15, wherein a running frequency of the first processing core is different from a running frequency of the second processing core; and
the first processing core comprises an asynchronous interface, configured to: receive the second running information from the second processing core through the bus, and perform asynchronous logic processing on the second running information.

17. The apparatus according to any one of claims 10 to 16, wherein the first processing core comprises a first cache; and
the first processing core is further configured to write the second running information into the first cache as prefetch information of the first service.

18. The apparatus according to any one of claims 10 to 17, wherein the second processing core comprises:
a memory access control module, configured to send the second running information to a second cache, wherein the second running information comprises address information accessed by the memory access control module in a process in which the second processing core runs the second service; and
the second cache, configured to: filter a repeated address from the second running information, and send, to the first processing core, the second running information obtained by filtering the repeated address.

19. An electronic device, wherein the electronic device comprises a memory and at least one processor, the memory is configured to store computer instructions, and the at least one processor comprises a plurality of processing cores and is configured to execute the computer instructions, so that the electronic device implements the service processing method for the plurality of processing cores according to any one of claims 1 to 9.

20. A computer-readable storage medium, wherein the computer-readable storage medium stores computer instructions, and when the computer instructions are run on a device, the device is enabled to perform the service processing method for the plurality of processing cores according to any one of claims 1 to 9.
